# EUROPÄISCHE PATENTSCHRIFT

(11) **EP 2 848 854 B1**
(45) Veröffentlichungstag und Bekanntmachung des Hinweises auf die Patenterteilung: **15.08.2018**
(21) Anmeldenummer: 13184273.4
(22) Anmeldetag: 13.09.2013
(51) Int. Cl.: F16P 3/16

(54) **Vorrichtung zur Arretierung eines verschiebbaren Bauteils**
Device for locking a movable component
Dispositif de blocage d'un élément de construction mobile

(43) Veröffentlichungstag der Anmeldung: 18.03.2015
(73) Patentinhaber: Strasser Maschinenbau GmbH, 88276 Berg/Ravensburg (DE)
(72) Erfinder: Strasser, Karl-Heinz, 88276 Berg (DE)
(74) Vertreter: Engelhardt, Volker

(56) Entgegenhaltungen:
- GB-A- 1 151 693
- JP-A- 2002 122 291
- SU-A1- 1 046 123
- US-A- 4 036 343
- US-A- 4 527 684

## Beschreibung

Die Erfindung bezieht sich auf eine Vorrichtung zur Arretierung eines verschiebbaren Bauteils, insbesondere vor einer abzuschirmenden Arbeits- oder Zutrittsstelle angeordneten Schutz- oder Schiebetür, nach dem Oberbegriff des Patentanspruches 1.

Aus der EP 2 562 464 A1 kann eine solche Arretierungsvorrichtung zur Festsetzung eines Bauteils, das zwischen einer oder zwei Profilschienen beweglich gehalten ist, entnommen werden. Es ist nämlich aus Sicherheitsgründen wünschenswert, wenn eine Arbeitsstelle an einer Werkzeugmaschine oder der Zutrittsbereich, beispielsweise eines Aufzuges oder einer Schiebetür an einem Zug festgesetzt ist, wenn ein Hindernis in den Arbeits- oder Zutrittsbereich unbeabsichtigt eingeführt ist, um Verletzungen oder Beschädigungen an den jeweiligen Bauteil oder Hindernis zu vermeiden.

Um die Arretierung des Bauteils, insbesondere der Schiebe- oder Schutztür, zu erreichen, ist eine Führungssäule vorgesehen, die parallel zu den Profilschienen verläuft und die mit einem Sperrglied im Arretierungszustand des Bauteils zusammenwirkt. Das Sperrglied umgreift dabei ganz oder teilweise die Führungssäule und steht in trieblicher Wirkverbindung mit einer an dem Bauteil gelenkig gelagerten Kontaktleiste. Trifft die Kontaktleiste auf ein Hindernis, während das Bauteil zugestellt wird, wird über mechanische Verbindungselemente das Sperrglied aktiviert, indem die Kontaktleiste verschwenkt ist. Durch die Verschwenkung der Kontaktleiste werden nämlich die mechanischen Verbindungselemente aus Ihrer Ausgangsposition in einer Endposition überführt und diese Bewegung ist an das Sperrglied weitergeleitet, so dass dieses aus einer die Führungssäule umgreifenden Stellung in eine mit der Führungssäule reibschlüssig zusammenwirkenden Stellung überführt ist. Folglich entsteht zwischen dem Sperrglied und der Führungssäule eine triebliche oder kraftschlüssige Wirkverbindung, durch die das Bauteil zuverlässig gestoppt ist, um das eingeführte Hindernis nicht zu beschädigen oder falls es sich beispielsweise um ein menschliches Körperteil handeln sollte, dieses nicht zu verletzen.

Aus der JP 2002 122291 ist eine Schutzvorrichtung mit einer Kontaktleiste gemäß dem Oberbegriff der unabhängigen Ansprüche 1 und 2 bekannt geworden. Die Kontaktleiste ist mittels Blattfedern an dem Bauteil beweglich gelagert. Wird das Bauteil von einer Verfahreinrichtung bewegt und trifft auf ein Hindernis, wird die Kontaktleiste durch das Hindernis gegen das Bauteil gedrückt. Infolge dessen ist ein Schalter betätigt, der ein Signal zur Aktivierung der Bremse der Verfahreinrichtung generiert, so dass mittels der Bremse das Bauteil in seiner Zustellbewegung gestoppt ist.

In US 4527684 ist eine Schutzvorrichtung einer Presse offenbart. Eine Kontaktleiste ist an einem Bauteil schwimmend gelagert gehalten. Trifft während eines Zustellvorganges der Presse die Kontaktleiste auf ein Hindernis, aktiviert die Kontaktleiste über einen elektrischen Schaltkreis eine Bremse der Schutzvorrichtung der Presse.

Aus der US 4036343 ist eine vergleichbare Schutzvorrichtung bekannt geworden. Jedoch sind dort zwischen dem Bauteil und der Kontaktleise eine Vielzahl von Schaltelementen angeordnet. Trifft die Kontaktleiste auf ein Hindernis, wird die Kontaktleiste durch das Hindernis gegen ein oder mehrere Schaltelemente gedrückt und die Bremse ist aktiviert.

Solche Arretierungsvorrichtungen haben sich in der Praxis bewährt, jedoch hat sich herausgestellt, dass solche Bauteile ausschließlich mit einer bestimmten Zustellgeschwindigkeit verfahren werden können. Um nämlich sicherzustellen, dass das möglicherweise in die Arbeits- oder Zutrittsstelle eingeführte Hindernis nicht beschädigt oder verletzt wird, ist es erforderlich, das Bauteil in Abhängigkeit von der Zustellgeschwindigkeit zu stoppen. Aufgrund der mechanischen Verbindungselemente tritt eine gewisse zeitliche Verzögerung zwischen dem Erstkontakt der Kontaktleiste und dem Hindernis und der Betätigung des Sperrgliedes ein. Darüber hinaus benötigt das Sperrglied einen bestimmten Weg, der entlang der Führungssäule zurückzulegen ist, um eine ausreichende Kraft auf die Führungssäule auszuüben, durch die das Bauteil gestoppt ist. Je schneller jedoch das Bauteil zugestellt wird, desto mehr Weg legt das Bauteil nach dem Erstkontakt der Kontaktleiste mit dem Hindernis zurück, wodurch sich die Gefahr einer Beschädigung oder Verletzung erheblich erhöht.

Es ist daher Aufgabe der Erfindung, eine Vorrichtung der eingangs genannten Art zur Arretierung eines Bauteils zur Verfügung zu stellen, durch die eine wesentlich höhere Zustellgeschwindigkeit für die Bewegung des Bauteils genutzt werden kann, ohne dass die gesetzlich normierten Sicherheitsbestimmungen zur Aufstoppung bzw. Arretierung des Bauteils verletzt sind.

Diese Aufgabe ist durch die Merkmale des kennzeichnenden Teils von Patentansprüchen 1 und 2 gelöst.

Weitere vorteilhafte Weiterbildungen der Erfindung ergeben sich aus den Unteransprüchen.

Dadurch, dass zwischen der Kontaktleiste und dem Bauteil eine Rückholeinrichtung angeordnet ist, dass die Rückholeinrichtung trieblich mit der Kontaktleiste verbunden ist und dass beim Auftreffen der Kontaktleiste auf ein in die Arbeits- oder Zutrittsstelle eingreifendes Hindernis die Rückholeinrichtung durch den Widerstand des Hindernisses derart aktiviert ist, dass die Kontaktleiste durch die Rückholeinrichtung in Richtung des Bauteils bewegt oder verschwenkt ist, ist erreicht, dass die Kontaktleiste zum einen das Sperrglied aktiviert und nach einer bestimmten Zeit das Bauteil festgesetzt ist, und zum anderen, dass genügend Raum freigegeben ist, bevor die Kontaktleiste oder die Unterkante des Bauteils auf das Hindernis auftrifft. Folglich ist der Abstand zwischen der Unterkante des Bauteils und einem eingeführten Hindernis vergrößert, wodurch mehr Zeit zur Verfügung steht, um die Bewegung des Bauteils zu stoppen.

Zudem ist die Kontaktleiste länger beweglich oder verschwenkbar an dem Bauteil befestigt, so dass durch die Aktivierung der Rückholeinrichtung die Kontaktleiste aktiv aus der Gefahrenzone, die durch das eingeführte Hindernis gebildet ist, wegezogen ist. Auch wenn die Kontaktleiste linear beweglich an dem Bauteil befestigt ist, kann diese durch die Rückholeinrichtung aus dem Gefahrenbereich in Richtung des Bauteiles zurückgezogen werden, denn durch die Rückholeinrichtung kann eine schnellere Rückholbewegung für die Kontaktleiste erreicht werden als die tatsächlich vorherrschende Zustellgeschwindigkeit des Bauteils ist.

Vorteilhafter Weise umfasst die Rückholeinrichtung eine Zugstange , die an der Kontaktleiste und an dem Bauteil befestigt ist, so dass im üblichen Betätigungszustand des Bauteils keine Relativbewegungen zwischen der Rückholeinrichtung und dem Bauteil erfolgt, denn die Rückholeinrichtung wird permanent zusammen mit dem Bauteil bewegt. Darüber hinaus weist die Rückholeinrichtung eine vorgespannte Schraubendruckfeder (oder einen anderen Energiespeicherelement) auf, die zwischen einem Kulissenkörper und der Kontaktleiste angeordnet ist. Der Kulissenkörper sitzt dabei in einem Arretierungssitz. Sobald die Kontaktleiste auf ein Hindernis auftrifft, wird eine Kraft über die Kontaktleiste und die Zugstange auf den Kulissenkörper übertragen, wodurch dieser aus dem Arretierungssitz bewegt ist. Durch die Vorspannkraft der Schraubendruckfeder wird nunmehr die Kontaktleiste in Richtung bzw. entgegen der Zustellrichtung der Unterkante des Bauteils aktiv gezogen, und zwar vorteilhafterweise mit einer Geschwindigkeit, die größer bemessen ist als die Zustellgeschwindigkeit des Bauteils , so dass die Kontaktleiste unverzüglich an die Unterseite oder Unterkante des Bauteils bewegt ist. Somit ist der Raum zwischen der Unterkante und der Kontaktleiste freigegeben, der im Betätigungsfalle der Kontaktleiste zur Verfügung steht, um das Bauteil zu arretieren. Zugleich die dynamische Masse der Kontaktleiste reduziert.

In der Zeichnung ist ein erfindungsgemäßes Ausführungsbeispiel dargestellt, das nachfolgend näher erläutert ist. Im Einzelnen zeigt:
- Figur 1a: eine Vorrichtung zur Arretierung eines zwischen zwei Profilschienen beweglich verfahrbaren Bauteils, an dessen Unterseite eine Kontaktleiste vorgesehen ist, mit einer Servoeinrichtung, durch die das Bauteil bewegt ist und mit einer Führungssäule, durch die über ein Sperrglied das Bauteil im Betätigungsfalle arretiert ist, in perspektivischer Ansicht,
- Figur 1b: die Vorrichtung gemäß Figur 1a, in Vorderansicht und in einer nicht betätigten Ausgangsstellung,
- Figur 1c: die Vorrichtung gemäß Figur 1a, in Vorderansicht und im Betätigungszustand,
- Figur 2a: ein Ausschnitt aus der Vorrichtung gemäß Figur 1b, mit einer Rückholeinrichtung, im unbetätigten Zustand,
- Figur 2b: die Rückholeinrichtung gemäß Figur 2a, beim Erstkontakt der Kontaktleiste mit einem Hindernis,
- Figur 2c: die Rückholeinrichtung gemäß Figur 2b, im betätigten Zustand der Kontaktleiste,
- Figur 2d: eine vergrößerte Darstellung der Rückholeinrichtung gemäß Figur 2a, mit einem Arretierungssitz und einer in diesem festgesetzten Kulissenkörper,
- Figur 3a: die Rückholeinrichtung gemäß Figur 2a, in vergrößerter Darstellung, in andersartiger Ausgestaltung,
- Figur 3b: die Vorrichtung gemäß Figur 1a, in der die Rückholeinrichtung mit der Servoenrichtung verbunden ist,
- Figur 4a: die Vorrichtung gemäß Figur 1a, in vergrößerter Darstellung,
- Figur 4b: die Vorrichtung gemäß Figur 4a in vergrößerter Darstellung
- Figuren 5a: die Vorrichtung gemäß Figur 1a mit unterschiedlich ausgestalteten Konbis 5d turverläufen für die Kontaktleiste und die Unterkante des Bauteils.

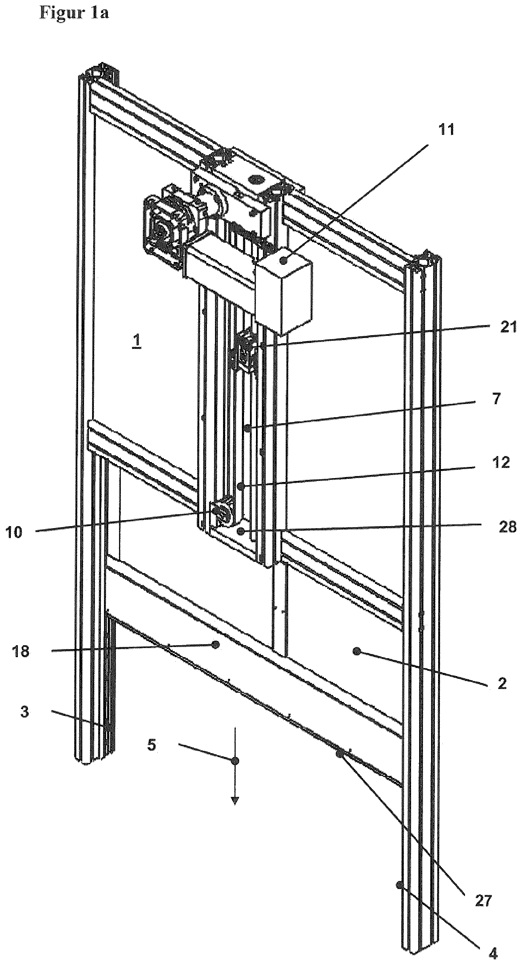

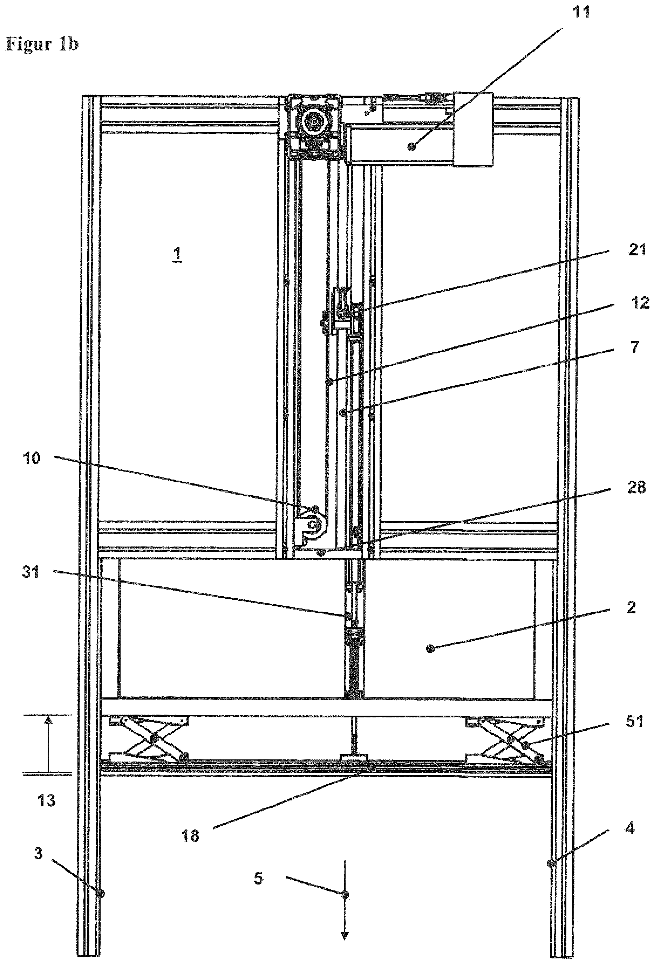

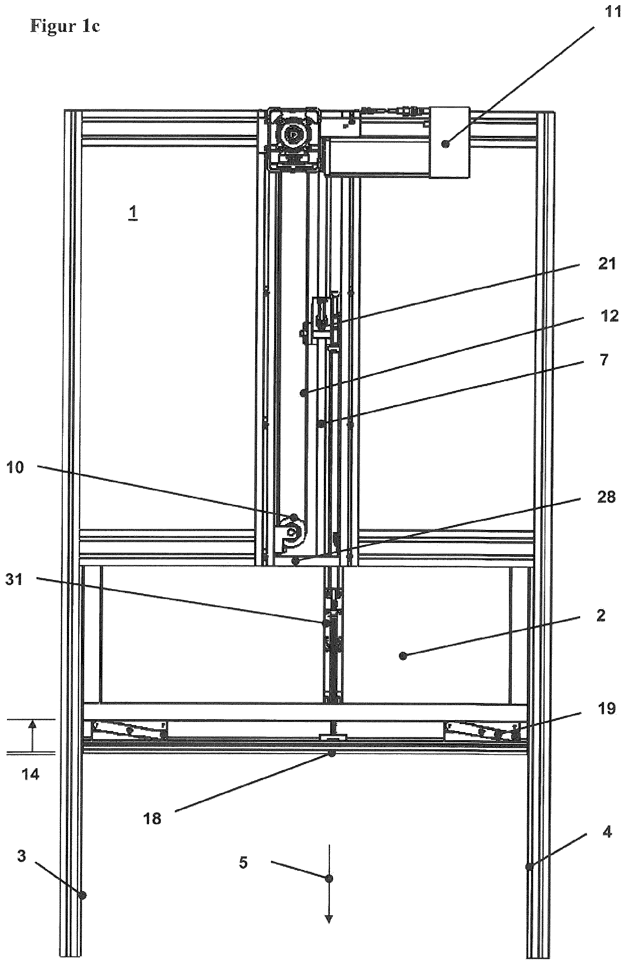

In den Figuren 1 bis 4c ist eine Vorrichtung 1 zur Arretierung eines verschiebbaren Bauteils 2, insbesondere einer vor einer abzuschirmenden Arbeits- oder Zutrittsstelle einer Maschine bzw. eines Zugangs angeordneten Schiebe- oder Schutztür zu entnehmen. Das Bauteil 2 bewegt sich in der mit der Bezugsziffer 5 gekennzeichneten vertikalen Verstellrichtung 5, um die Arbeitsstelle an der Werkzeugmaschine, an einem Förderband oder einer sonstigen maschinellen Anlage während des Bearbeitungsprozesses nach außen zu verschließen, so dass diese nicht zugänglich und insoweit geschützt ist. Das Bauteil 2 ist selbstverständlich auch in der Horizontalen oder in einer geneigten Ebene bewegbar, wenn beispielsweise der Eingangsbereich an einem Zugang zu verschließen ist oder für den Zutritt in den Zugang.

Zum Be- und Entladen der Arbeitsstelle ist es erforderlich, das Bauteil 2 entgegen der Verstellrichtung 5 anzuheben. Zu diesem Zweck ist das Bauteil 2 in zwei C- oder U-förmig ausgestalteten Profilschienen 3 und 4 verschiebbar gehalten, die parallel und beabstandet zueinander ausgerichtet sind.

Des Weiteren ist eine Servoeinrichtung 11, beispielsweise in Form eines Elektromotors, vorgesehen, durch die ein Keilriemen 12 angetrieben ist. An dem Keilriemen 12 ist an einer vorgegebenen Position die Vorrichtung 1 angebracht, die somit trieblich mit dem Keilriemen 12 und dem Bauteil 2 verbunden ist. Durch die Rotation des Keilriemens 12 wird demnach das Bauteil 2 in den Profilschienen 3 und 4 auf und ab bewegt. Im Bereich eines Bodens 28 der Arbeitsstelle ist dabei ein Umlenkrad 10 vorgesehen, durch das der Keilriemen 12 geführt gehalten ist.

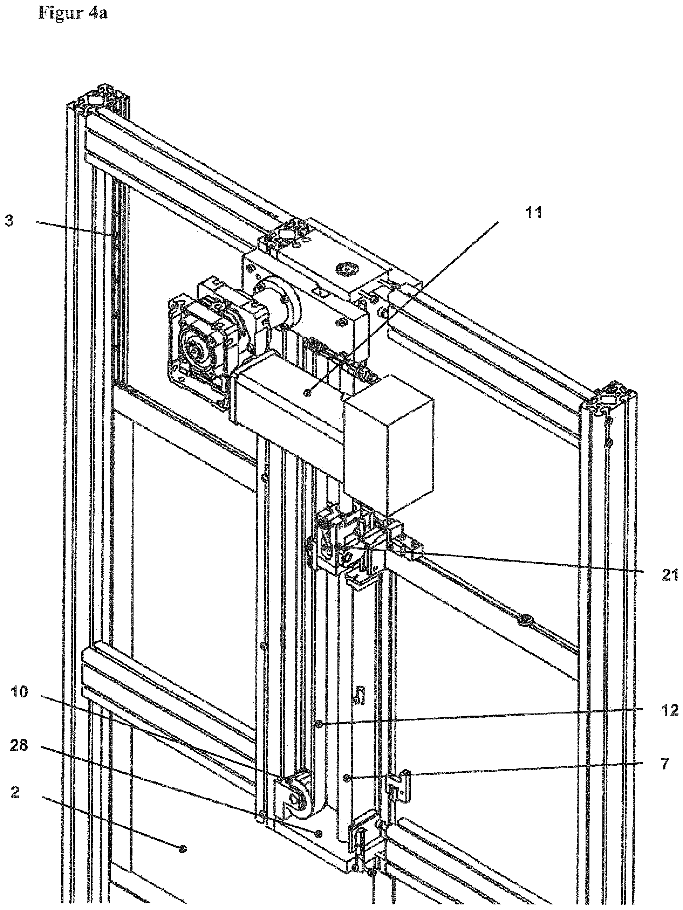

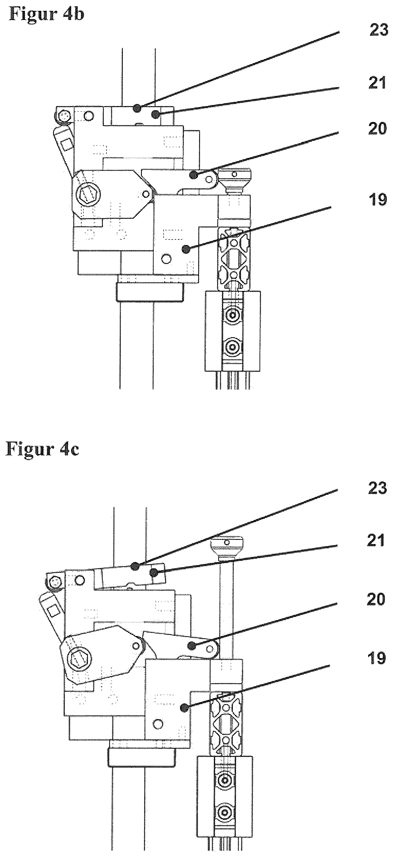

Falls während des Schließvorganges des Bauteils 2, also bei der Bewegung in die Verstellrichtung 5, ein Bedienpersonal unsachgemäß die Arbeitsstelle der Werkzeugmaschine bedient und beispielsweise in diese eingreift und folglich ein Hindernis erzeugt, könnte der Arm durch die Bewegung des Bauteils 2 zwischen diesem und einer Schließkante 27 eingeklemmt und verletzt werden. Aus Sicherheitsgründen ist daher das Bauteil 2 unmittelbar dann zu stoppen, wenn dieses während der Verstellbewegung nach unten auf ein Hindernis auftrifft. Zu diesem Zweck ist an der Unterkante des Bauteils 2 eine Kontaktleiste18 angebracht, die nach außen verschwenkbar oder in der Ebene des Bauteils 2 bewegbar an dem Bauteil 2 gelagert ist und an dem eine Winkelschiene 19 als mechanisches Verbindungselement angebracht ist, die mit einer Wippe 20 verbunden ist. Die Wippe 20 ist dabei an der Vorrichtung 1 verschwenkbar gelagert und sobald die Kontaktleiste18, wie dies in den Figuren 4a und 4b dargestellt ist, nach außen gedrückt oder linear angehoben ist, wird die Wippe 20 nach unten geschoben und ein Sperrglied 21 der Vorrichtung 1 wird zur Arretierung des Bauteils 2 aktiviert. Das Sperrglied 21 besteht dabei aus einer winkelig ausgestalteten Halteplatte, in die eine Öffnung 23 eingearbeitet ist.

Parallel und beabstandet zu einer oder zu beiden Seiten der Profilschienen 3 und 4 ist eine Führungssäule 7 vorgesehen, an der das Sperrglied 21 mit Spiel verläuft. Die Öffnung 23 wird demnach nahezu vollständig von der Führungsstange 7 ausgefüllt; allerdings liegt die Innenseite der Öffnung 23 nicht an der Außenseite der Führungssäule 7 während der Hubbewegung des Bauteils 2 an, so dass keinerlei Berührung im normalen Betriebszustand herrscht und daher auch keinerlei Verschleiß an der Führungssäule 7 oder an der Innenseite der Öffnung 23 entsteht.

Wird allerdings die Kontaktleiste18 betätigt und nach außen gedrückt oder linear angehoben, erfolgt eine Verstellung des Sperrgliedes 21 derart, dass die Öffnung 23 aus der Horizontalen gekippt ist und somit, wie dies insbesondere in den Figuren 4b und 4c zu entnehmen ist, eine kraftschlüssige Wirkverbindung zwischen der Führungssäule 7 und dem Sperrglied 21 entsteht, wodurch eine Bremskraft entsteht, durch die die Verstellbewegung des Bauteils 2 gestoppt ist und durch die auf die Führungssäule 7 eine Bremskraft ausgeübt ist.

Um das Sperrglied 21 von der Führungssäule 7 frei zu geben, ist es zunächst erforderlich, das Sperrglied 21 in seine Ausgangslage zu überführen und anschließend die Kontaktleiste18 wieder in seine vertikale Ausgangsstellung zu drücken, so dass die an dem Sperrglied 21 vorgesehenen nicht dargestellte Druckfedern und das an der Kontaktleiste 18 vorhandene Federelement 33 vorgespannt sind. Durch die Druckfedern soll nämlich die zuverlässige Wirkverbindung zwischen dem Sperrglied 21 und der Führungssäule 7 hergestellt sein.

Insbesondere aus den Figuren 1a, 1b und 1c ist ersichtlich, dass zwischen dem Bauteil 2 und der Kontaktleiste 18 eine Rückholeinrichtung 31 vorgesehen ist. Die Rückholeinrichtung 31 besteht dabei aus einer Zugstange 32, die parallel zu der Bewegungsrichtung 7 des Bauteils 2 verläuft. Die Zugstange 32 ist fest mit der Kontaktleiste 18 verbunden. Die Funktion der Rückholeinrichtung 31 besteht darin, die Kontaktleiste 18 aktiv und schneller als die Zustellgeschwindigkeit des Bauteils 2 in Richtung des Bauteils 2 zu bewegen. Die Kontaktleiste 18 ist dabei beabstandet zu der Unterkante des Bauteils 2 angeordnet, so dass dieser Weg zur Verfügung steht, um das Bauteil 2 zu arretieren, sobald die Kontaktleiste 18 auf ein Hindernis auftrifft.

In den Figuren 1b und 1c sind die feste Position 13 der Zugstange 32 und damit der Kontaktleiste 18 sowie die Endposition 14 der Zugstange 32 und Kontaktleiste 18 gezeigt.

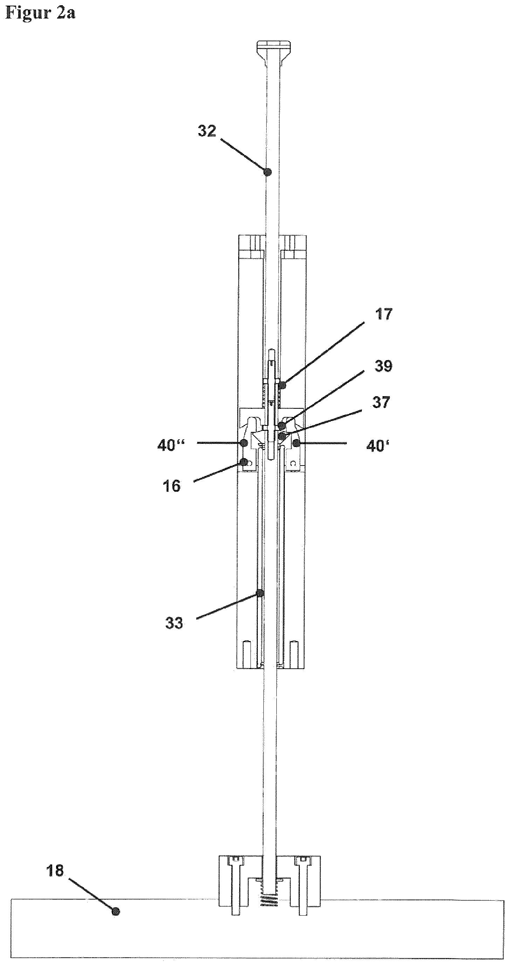

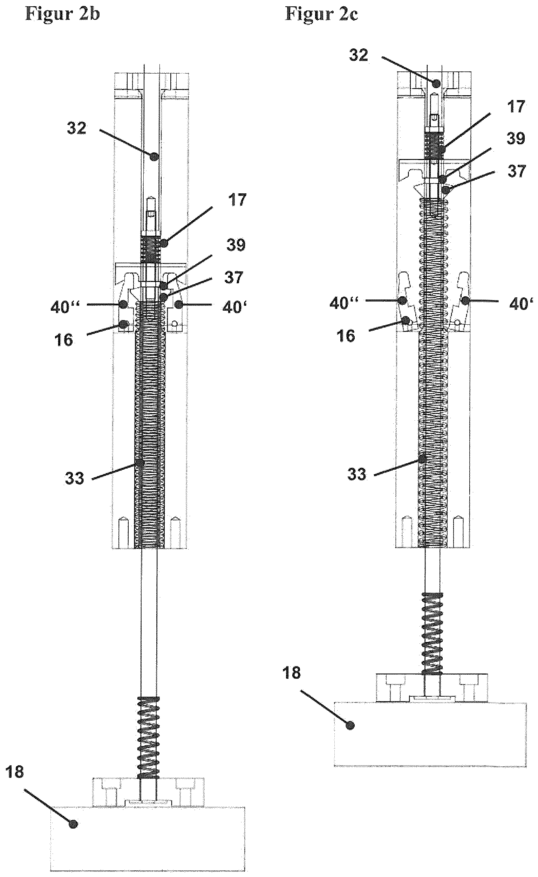

In den Figuren 2a, 2b und 2c sind die unterschiedlichen Bewegungsabläufe der Zugstange 32 dargestellt, die nämlich von der festen Position 13 über eine Übergangsposition gemäß Figur 2b in eine Endposition 14 überführt ist und dabei die Kontaktleiste 18 in der von dem Bauteil 2 gebildeten Ebene, also linear, in Richtung des Bauteils 2 zieht.

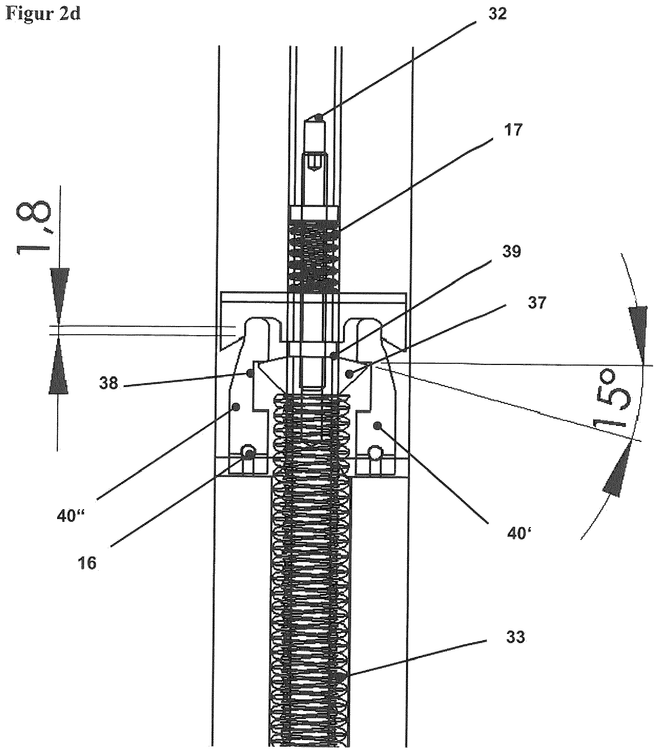

Aus Figur 2d ist ersichtlich, dass an dem dem Bauteil 2 abgewandten freien Ende der Zugstange 32 ein Kulissenkörper 37 angebracht ist. Zwischen dem Kulissenkörper 37 und der Unterkante des Bauteils ist eine Schraubendruckfeder bzw. ein Federelement 33 vorgespannt.

Der Kulissenkörper 37 besteht aus einer senkrecht zu der Symmetrieachse der Zugstange 32 verlaufenden Ringfläche 39, die aus der senkrecht zu der Zugstange 32 verlaufenden Ebene unter einem Winkel von 15° nach außen geneigt ist. Darüber hinaus ist in dem Bauteil 2 ein Arretierungssitz 38 vorgesehen, der aus zwei Halbschalen 40' und 40" gebildet ist. Die beiden Halbschalen 40' und 40" umgreifen den Kulissenkörper 37 zangenartig und der von den Halbschalen 40' und 40" gebildete bzw. eingeschlossene Innendurchmesser ist dabei kleiner bemessen als der Außenumfang der Ringfläche 39 des Kulissenkörpers 37, so dass die Zugstange 32, obwohl das Federelement 33 vorgespannt ist, durch die Halbschalen 40' und 40" bzw. den Arretierungssitz 38 festgesetzt ist und sich somit nicht bewegt.

Die beiden Halbschalen 40' und 40" sind über ein Gelenk 16 an dem Bauteil 2 gelagert. Sobald demnach die Kontaktleiste 18 gemäß Figur 2a erstmals auf ein Hindernis auftrifft, entsteht eine Kraft auf das Gelenk 16 und damit auch auf die Halbschalen 40' bzw. 40", wodurch diese nach außen aufgeschwenkt werden, denn die Ringfläche 39 drückt gegen die von dem Arretierungssitz 38 gebildeten Anlageflächen. Aufgrund der geneigten Ausgestaltung der Ringfläche 39 werden die Halbschalen 40' und 40" nach außen aufgedrückt und durch die Vorspannkraft des Federelementes 33 wird die Zugstange 32 entgegen der Bewegungsrichtung des Bauteils 2 verfahren. Sobald die Zugstange 32 die Endposition 14 erreicht hat, wird die Bewegungsenergie der Zugstange 32 durch eine Schraubendruckfeder 17 gedämpft, so dass die Kontaktleiste 18 nicht gegen die Unterkante des Bauteils 2 schlägt.

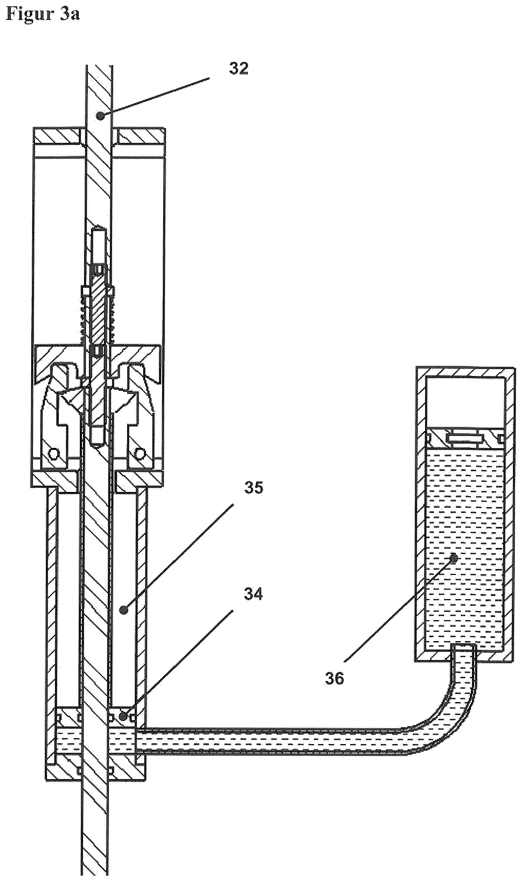

Gemäß Figur 3a kann die Zugstange 32 auch mittels eines Kolbens 34 entgegen der Bewegungsrichtung des Bauteils 2 beim Auftreffen der Kontaktleiste 18 auf ein Hindernis aktiviert sein. Dabei ist der Kolben 34 in einem Kolbenraum 35 angeordnet, in dem ein Medium 36 unter einem bestimmten Druck angeordnet ist. Sobald durch die Aufschwenkung der beiden Halbschalen 40' und 40" das Medium 36 aus dem Kolbenraum 35 entweichen kann, wird die Zugstange 32 bewegt, wodurch auch die Kontaktleiste betätigt ist.

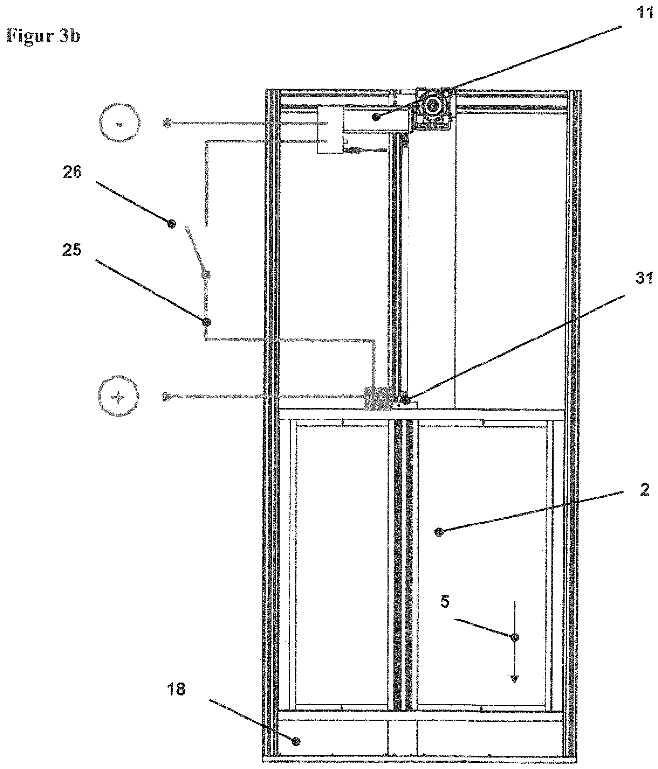

In Figur 3b ist die elektrische Verbindung zwischen der Rückholeinrichtung 31 und der Servoeinrichtung 11 schematisch dargestellt. Die Bauteile zur Arretierung des Bauteils 2, insbesondere das Sperrglied 21 und die Führungssäule 7, sind bei dieser Ausführungsvariante nicht erforderlich.

Die Festsetzung des Bauteils 2 erfolgt vielmehr dadurch, dass bei der Aktivierung der Kontaktleiste 18 zunächst die Rückholeinrichtung 31, wie in den vorherigen Figuren beschrieben, die Kontaktleiste 18 entgegen der Bewegungsrichtung des Bauteils 2 mit einer höheren Geschwindigkeit, als die Zustellgeschwindigkeit des Bauteils 2 beträgt, zurückzieht und gleichzeitig dadurch ein elektrisches Schaltsignal generiert ist, das über elektrische Leitungen 25 an einen Schalter 26 weitergegeben ist. Durch diese elektrischen Schaltsignale wird der Schalter 26 geöffnet, so dass die Servoeinrichtung 11 unverzüglich von einer Stromquelle elektrisch entkoppelt ist und somit sperrt. Die elektrischen Leitungen 25 und der elektrische Schalter 26 bilden daher eine nicht dargestellte Sperrschaltung , durch die die Servoeinrichtung 11 bei der Aktivierung der Kontaktleiste 18 getrennt ist.

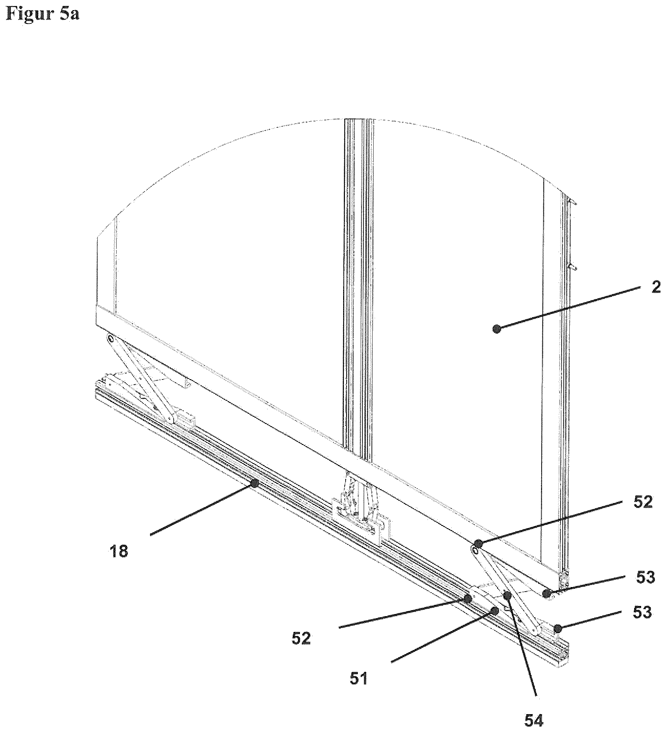

In Figur 5a ist die lineare Ausgestaltung der Kontaktleiste 18 und der Unterkante des Bauteils 2 zu entnehmen, die über zwei zueinander beabstandet und parallel zueinander verlaufenden Haltearme 51 miteinander verbunden sind. Die Haltearme 51 sind über ein Drehgelenk 52 sowohl mit dem Bauteil 2 als auch mit der Kontaktleiste 18 verbunden. Fakultativ können auch zwei zueinander beabstandet und parallel verlaufende Führungsarme 53, die jeweils über einen Knotenpunkt 54 scherenartig oder kreuzweise mit dem jeweiligen Haltearm 51 verbunden sind, an dem Bauteil 2 und der Kontaktleiste 18 über ein Drehgelenk 52 angebracht sein.

Durch die Verwendung von zwei parallel und beabstandet zueinander verlaufenden Haltearmen 51 erfolgt eine Drehbewegung der Kontaktleiste 18 um die beiden Aufhängepunkte an dem Bauteil 2, und zwar in die Richtung, in die die Haltearme 51 ausgerichtet sind.

Durch die zusätzliche Anbringung der Führungsarme 53 entsteht eine Linearbewegung der Kontaktleiste 18 in der von dem Bauteil 2 gebildeten Ebene.

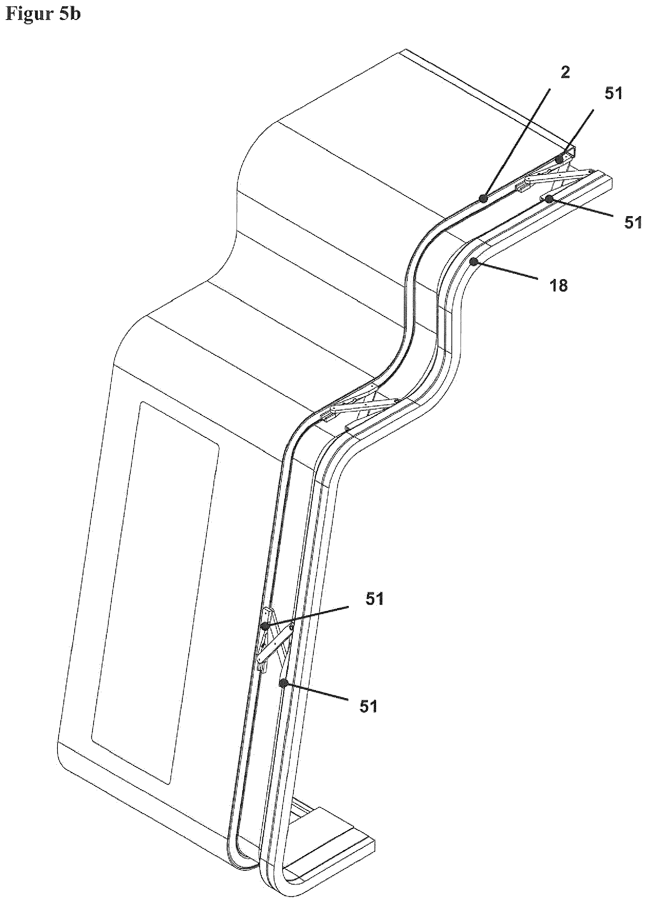

Aus Figur 5b ist ersichtlich, dass die Kontur der Kontaktleiste 18 und die Unterkante des Bauteils 2 wellenförmig ausgestaltet sein kann, denn die entsprechenden Haltearme 51 können derart zwischen der Kontaktleiste 18 und dem Bauteil 2 angebracht sein, dass diese die zuverlässige Bewegung der Kontaktleiste 18 zur Arretierung des Bauteils 2 aufnehmen.

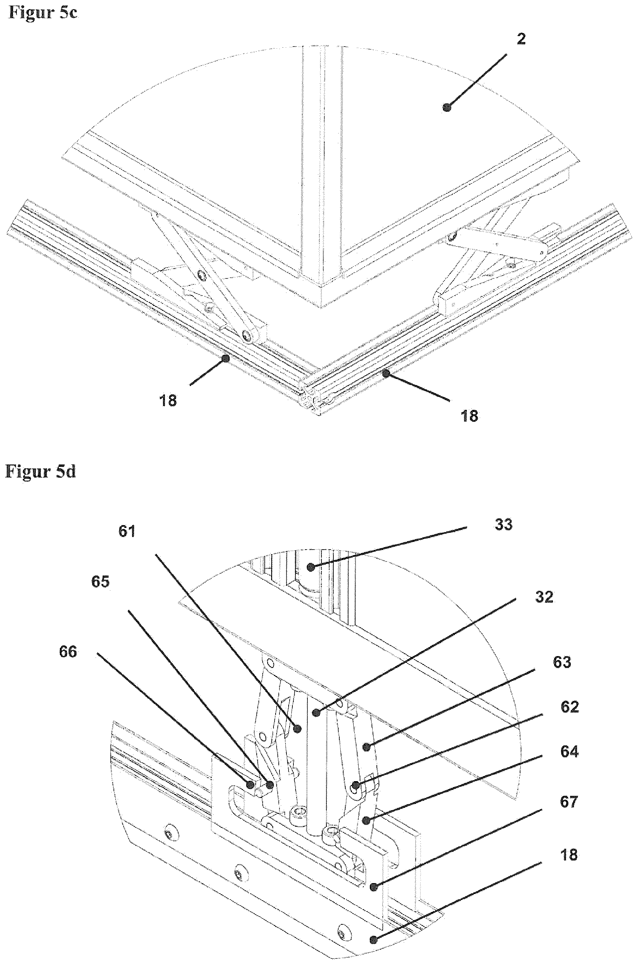

In Figur 5c ist dargestellt, dass die Kontaktleisten 18 in einem rechten Winkel zueinander verlaufen können, um beispielsweise einen U-förmigen Konturverlauf des Bauteils 2 nachzubilden. In den jeweiligen Eckbereichen sind beiden benachbart zueinander verlaufenden Kontaktleisten 18 mittels einer starren Schraubverbindung mechanisch miteinander arretieren und keine drehbaren Gelenkverbindungen nötig. Unabhängig an welcher Position der jeweiligen Kontaktleiste 18 ein Hindernis die Bewegung des Bauteils 2 behindert, löst dieses Hindernis die Aktivierung der Rückholeinrichtung 31 aus, so dass über den gesamten Konturverlauf der Kontaktleiste 18 eine Auslösung der Kontaktleiste 18 und damit eine Arretierung des Bauteils 2 aus.

Aus Figur 5d ist ersichtlich, dass zwischen der Kontaktleiste 18 und dem Bauteil 2 ein Kniehebel 61 angeordnet ist. Der Kniehebel 61 besteht aus zwei Stegen, die über einen Gelenkbolzen 62, der als Knotenpunkt für die zwei den Kniehebel 61 bildenden Arme 63 und 64 anzusehen ist.

Der vom Gelenkbolzen 62 senkrecht abstehende Arm 63 ist dabei mit dem Bauteil 2 und der andere Arm 64 ist mit der Kontaktleiste 18 verbunden.
Zusätzlich ist auf der Leiste 64 ein Bolzen 65 angebracht welche über eine schiefe Ebene 66 den Halter 67 drückt welcher wiederum an der Kontaktleiste 18 befestigt ist. Der Druckaufbau erfolgt durch die Druckfeder 33 welche wiederum an der Zugstange 32 befestigt ist.

Sobald die Kontaktleiste 18 auf ein Hindernis während der Bewegung des Bauteils 2 trifft, wird der Kniehebel 61 aktiviert, da dieser die unter Vorspannung stehende Druckfeder 33 nach oben drückt. Durch die im Halter 67 angebrachte schiefe Ebene 66 kann die Druckfeder 33 sehr stark vorgespannt werden was eine hohe Rückholgeschwindigkeit zur Folge hat. Weiteres bietet die schiefe Ebene 66 in Kombination mit dem Bolzen 65 den Vorteil das trotz hoher Federvorspannkraft die Auslösekraft der Kontaktleiste sehr niedrig bleibt und somit auch die dynamische Aufprallmasse bei hohen Geschwindigkeiten.

Es ist selbstverständlich auch möglich, die Rückholeinrichtung 31 mittels elektrischer Antriebs- und Auslösemittel auszustatten, um die Kontaktleiste 18 in Richtung des Bauteils 2 beim Auftreffen auf ein Hindernis zu bewegen. Zu diesem Zweck sind an der der Bewegungsrichtung zugewandten Unterseite der Kontaktleiste 18 mechanische oder optische Sensoren angebracht, die beispielsweise aus einer Druckplatte oder Druckknopf oder aus einem nach Art einer Lichtschranke funktionierenden Lichtleiter bestehen. Sobald ein Hindernis die Sensoren betätigt bzw. deren Lichtstrahl unterbricht, werden über elektrische Schaltsignale die elektrischen Antriebsmittel betätigt, so dass die Zugstange 32 durch die elektrischen Antriebsmittel nach oben bzw. entgegen der Bewegungsrichtung des Bauteils 2 bewegt werden, wodurch das Bauteil 2 von dem Hindernis wegbewegt ist.

## Patentansprüche

1. Vorrichtung (1) zur Arretierung eines verschiebbaren zur Vorrichtung (1) gehörenden Bauteils (2), insbesondere vor einer abzuschirmenden Arbeits- oder Zutrittsstelle angeordneten Schutz- oder Schiebetür,
- mit einer oder zwei parallel zueinander verlaufenden Profilschienen (3, 4), in denen das Bauteil (2) ein- oder beidseitig geführt und mittels einer Servoeinrichtung (11) verstellbar ist,
- mit einem Sperrglied (21), das mit einer parallel zu den Profilschienen (3, 4) verlaufenden Führungssäule (7) zur Arretierung des Bauteils (2) zusammenwirkt, oder einer Sperrschaltung , durch die die Servoeinrichtung (11) deaktvierbar ist,
- und mit einer an dem Bauteil (2) angebrachten Kontaktleiste (18), die mit dem Sperrglied (21) über mechanische Verbindungselemente (29) in trieblicher Wirkverbindung steht, oder mit der Sperrschaltung elektrisch verbunden ist, wobei zwischen der Kontaktleiste (18) und dem Bauteil (2) eine Rückholeinrichtung (31) angeordnet ist, wobei die Rückholeinrichtung (31) trieblich mit der Kontaktleiste(18) verbunden ist, wobei beim Auftreffen der Kontaktleiste (18) auf ein in die Arbeits- oder Zutrittsstelle eingreifendes Hindernis die Rückholeinrichtung (31) durch den Widerstand des Hindernisses aktiviert ist, und wobei die Kontaktleiste(18) durch die Rückholeinrichtung (31) in Richtung des Bauteils (2) linear bewegt oder verschwenkt ist,
**dadurch gekennzeichnet,**
**dass** die Rückholeinrichtung (31) aus einer Zugstange (32) und einem vorgespannten Federelement (33), vorzugsweise einer Schraubendruckfeder, gebildet ist, deren Vorspannkraft die Zugstange (32) aus einer festgesetzten Position (15) in eine Endposition (14) überführt.

2. Vorrichtung (1) zur Arretierung eines verschiebbaren zur Vorrichtung gehörenden Bauteils (2), insbesondere vor einer abzuschirmenden Arbeits- oder Zutrittsstelle angeordneten Schutz- oder Schiebetür, mit ein oder zwei parallel zueinander verlaufenden Profilschienen (3, 4), in denen das Bauteil (2) ein- oder beidseitig geführt und mittels einer Servoeinrichtung (11) verstellbar ist, mit einem Sperrglied (21, das mit einer parallel zu den Profilschienen (3, 4) verlaufenden Führungssäule (7) zur Arretierung des Bauteils (2) zusammenwirkt, oder einer Sperrschaltung , durch die die Servoeinrichtung (11) deaktvierbar ist, und mit einer an dem Bauteil (2) angebrachten Kontaktleiste(18), die mit dem Sperrglied (21) über mechanische Verbindungselemente (29) in trieblicher Wirkverbindung steht, oder mit der Sperrschaltung elektrisch verbunden ist,
wobei zwischen der Kontaktleiste (18) und dem Bauteil (2) eine Rückholeinrichtung (31) angeordnet ist, und wobei die Rückholeinrichtung (31) trieblich mit der Kontaktleiste(18) verbunden ist, wobei beim Auftreffen der Kontaktleiste (18) auf ein in die Arbeits- oder Zutrittsstelle eingreifendes Hindernis die Rückholeinrichtung (31) durch den Widerstand des Hindernisses aktiviert ist, und wobei die Kontaktleiste (18) durch die Rückholeinrichtung (31) in Richtung des Bau- teils (2) linear bewegt oder verschwenkt ist, **dadurch gekennzeichnet,**
**dass** die Rückholeinrichtung (31) aus einem Kolben (34) besteht, in dessen Kolbenraum (35) ein Medium (36), vorzugsweise aus Gas oder aus einem Fluid, eingefüllt ist, das unter einem vorgegebenen Innendruck steht, und dass beim Auftreffen der Kontaktleiste (18) auf ein Hindernis der Kolben (34) eine Zugstange (32) betätigt, die in trieblicher Wirkverbindung mit der Kontaktleiste (18) steht, und durch die die Zugstange (32) und die Kontaktleiste (18) in Richtung des Bauteils (2) verfahren oder verschwenkt ist.

3. Vorrichtung nach einem der vorgenannten Ansprüche,
**dadurch gekennzeichnet,**
**dass** die auf die Kontaktleiste (18) ausgeübte Rückstellkraft der Rückholeinrichtung (31) derart groß bemessen ist, dass die Kontaktleiste (18) schneller bewegt ist, als die Zustellgeschwindigkeit des Bauteils (2).

4. Vorrichtung nach einem der vorgenannten Ansprüche,
**dadurch gekennzeichnet,**
**dass** an der Zugstange (32) ein Kulissenkörper (37) vorgesehen ist, der an dem von der Kontaktleiste (18) abgewandten freien Ende der Zugstange (32) befestigt ist und dass der Kulissenkörper (37) in einem dem Bauteil (2) zugeordneten Arretierungssitz (38) eingesetzt ist.

5. Vorrichtung nach Anspruch 4, **dadurch gekennzeichnet,**
**dass** der Kulissenkörper (37) eine umlaufende Ringfläche (39) aufweist, die dem Arretierungssitz (38) zugewandt ist und dass die Ringfläche (39) bezogen auf die senkrecht zu der Zugstange (32) verlaufenden Ebene unter einem Winkel von 10° bis 20°, vorzugsweise unter einem Winkel von 15°, nach außen geneigt ist.

6. Vorrichtung nach Anspruch 4 oder 5 **dadurch gekennzeichnet,**
**dass** der Außenumfang des Kulissenkörpers (37) größer bemessen ist als der Innendurchmesser des Arretierungssitzes (38) und dass der Arretierungssitz (38) aus zwei Halbschalen (40' und 40") gebildet ist, die verschwenkbar über ein Gelenk (16) an dem Bauteil (2) gelagert sind.

7. Vorrichtung nach Anspruch 6, **dadurch gekennzeichnet,**
**dass** die Halbschalen (40', 40") des Arretierungssitzes (38) den Kulissenkörper (37) zangenartig umschließen und dass beim Erstkontakt der Kontaktleiste (18) mit einem Hindernis die Zugstange (32) um 1,5 bis 2 Millimeter, vorzugsweise um 1,8 Millimeter, angehoben ist und dass durch die Betätigungsbewegung der Zugstange (32) die beiden Halbschalen (40', 40") des Arretierungssitzes (38) aufgeschwenkt sind und den Kulissenkörper (37) freigeben,

8. Vorrichtung nach einem der vorgenannten Ansprüche,
**dadurch gekennzeichnet,**
**dass** die Kontaktleiste (18) mittels zwei parallel und beabstandet zueinander verlaufenden Führungsarmen (53), die jeweils gelenkig mit dem Bauteil (2) und der Kontaktleiste (18) verbunden sind, beabstandet zu der Unterkante des Bauteils (2) angeordnet sind.

9. Vorrichtung nach einem der vorgenannten Ansprüche,
**dadurch gekennzeichnet,**
**dass** die Kontaktleiste (18) mittels mindestens zweier Paare kreuzweise zueinander angeordneten Führungsarmen (53) beabstandet zu der Unterkante des Bauteils (2) angeordnet ist, dass die Paare der Führungsarme (53) gelenkig mit dem Bauteil (2) und der Kontaktleiste (18) verbunden sind und dass jeweils zwei zueinander beabstandete Führungsarme (53) der Paare von Führungsarmen (53) parallel zueinander verlaufen.

10. Vorrichtung nach einem der vorgenannten Ansprüche,
**dadurch gekennzeichnet,**
**dass** die Kontaktleiste an dem Bauteil mittels mindestens zweier beweglich an dem Bauteil und der Kontaktleiste angelenkten Haltearmen aufgehängt ist und dass die Haltearme parallel und beabstandet zueinander verlaufen.

11. Vorrichtung nach Anspruch 10, **dadurch gekennzeichnet,**
**dass** jeweils einer der Haltearme mit einem Führungsarm (53) kreuzweise gekoppelt ist und dass der Knotenpunkt des Halte- und des Führungsarmes (53) im unbetätigten Zustand der Kontaktleiste etwa mittig zwischen der Unterkante des Bauteils und der Oberkante der Kontaktleiste angeordnet ist.

12. Vorrichtung nach Anspruch 1 oder 2, **dadurch gekennzeichnet,**
**dass** zwischen dem Bauteil (2) und der Kontaktleiste (18) ein Kniehebel (561) angeordnet ist, der aus drei Armen (63, 64 und 65) besteht, die in einem Gelenkbolzen (62) gelagert sind.

13. Vorrichtung nach Anspruch 12
**dadurch gekennzeichnet,**
**dass** der Kniehebel (61) mit der Zugstange (32) der Rückholeinrichtung (31) gekoppelt ist.

14. Vorrichtung nach Anspruch 12 oder 13 **dadurch gekennzeichnet,**
**dass** durch die Betätigung des Kniehebels (61) eine Druckfeder (67), die unter Vorspannung steht, ausgelöst ist, und dass die Druckfeder (67) die beiden an der Kontaktleiste (18) angelenkten Arme (64, 65) des Kniehebels (61) aufspreizen.

## Claims

1. A device (1) for locking a movable component (2) belonging to the device (2), in particular a protective or sliding door arranged in front of a working or access point to be shielded,
- with one or two profile rails (3, 4) running parallel to one another, in which the component (2) is guided at one or both sides and which can be adjusted by means of a servo device (11),
- with a locking element (21) that interacts with a guide column (7) running parallel to the profile rails (3, 4) for locking the component (2), or a locking circuit by means of which the servo device (11) can be deactivated,
- and with a contact strip (18) attached to the component (2) which is in a driving active connection with the locking element (21) via mechanical connection elements (29), or is electrically connected to the locking circuit,
in which,
a recovery device (31) is arranged between the contact strip (18) and the component (2), in which case the recovery device (31) is in a driving connection with the contact strip (18), in which case when the contact strip (18) makes contact with an obstacle protruding into the working or access point the recovery device (31) is activated by means of the resistance of the obstacle, and in which case the contact strip (18) is moved in a linear direction or swivelled in the direction of the component (2) by the recovery device (31),
**characterised in that,**
the recovery device (31) comprises a pull rod (32) and a pre-stressed spring element (33), preferably a coil compression spring, the preload force of which moves the pull rod (32) out of a fixed position (15) to an end position (14).

2. The device (1) for locking a movable component (2) belonging to the device (2), in particular a protective or sliding door arranged in front of a working or access point to be shielded, with one or two profile rails (3, 4) running parallel to one another, in which the component (2) is guided at one or both sides and which can be adjusted by means of a servo device (11), with a locking element (21) that interacts with a guide column (7) running parallel to the profile rails (3, 4) for locking the component (2), or a locking circuit by means of which the servo device (11) can be deactivated, and with a contact strip (18) attached to the component (2) which is in a driving active connection with the locking element (21) via mechanical connection elements (29), or is electrically connected to the locking circuit, in which a recovery device (31) is arranged between the contact strip (18) and the component (2), in which case the recovery device (31) is in a driving connection with the contact strip (18), in which case when the contact strip (18) makes contact with an obstacle protruding into the working or access point the recovery device (31) is activated by means of the resistance of the obstacle, and in which case the contact strip (18) is moved in a linear direction or swivelled in the direction of the component (2) by the recovery device (31),
**characterised in that,**
the recovery device (31) comprises a piston (34) with a piston space (35) filled with a medium (36), preferably a gas or a fluid, that is subject to a specified internal pressure, and that when the contact strip (18) makes contact with an obstacle, the piston (34) actuates a pull rod (32) that is in a driving active connection with the contact strip (18), and is moved or swivelled in the direction of the component (2) by means of the pull rod (32) and contact strip (18)..

3. The device in accordance with one of the aforementioned claims,
**characterised in that,**
the recovery force of the recovery device (31) exerted on the contact strip (18) is of sufficient magnitude for the contact strip (18) to be moved faster than the advance speed of the component (2).

4. The device in accordance with one of the aforementioned claims,
**characterised in that,**
a sliding block (37) is provided on the pull rod (32) and the sliding block (37) is attached to the free end of the pull rod (32) facing away from the contact strip (18), and that the sliding block (37) is inserted in a detent seat (38) allocated to the component (2).

5. The device in accordance with Claim 4,
**characterised in that,**
the sliding block (37) has a peripheral ring surface (39) facing towards the detent seat (38) and that the ring surface (39) slopes outward at an angle of 10° to 20°, and preferably an angle of 15°, in relation to the plane running perpendicular to the pull rod (32).

6. The device in accordance with Claim 4 or 5,
**characterised in that,**
the periphery of the sliding block (37) is larger in dimension than the internal diameter of the detent seat (38) and that the detent seat (38) comprises two half-shells (40' and 40") that are mounted on the component (2) in a swivelling arrangement by means of a joint (16).

7. The device in accordance with Claim 6,
**characterised in that,**
the half-shells (40', 40") of the detent seat (38) enclose the sliding block (37) in the manner of tongs and that on first contact between the contact strip (18) and an obstacle, the pull rod (32) is lifted by 1.5 to 2 millimetres, and preferably 1.8 millimetres, and that due to the actuation movement of the pull road (32), the two half-shells (40', 40") of the detent seat (38) are swivelled open and thus release the sliding block (37).

8. The device in accordance with one of the aforementioned claims,
**characterised in that,**
the contact strip (18) is arranged at a distance from the bottom edge of the component (2) by means of two guide arms (53) running parallel with but spaced apart from one another, each of which is connected to the component (2) and the contact strip (18) in an articulated arrangement.

9. The device in accordance with one of the aforementioned claims,
**characterised in that,**
the contact strip (18) is arranged at a distance from the bottom edge of the component (2) by means of at least two pairs of guide arms (53) arranged crossways to one another, that the pairs of guide arms (53) are connected to the component (2) and the contact strip (18) in an articulated arrangement and that two guide arms (53) each of the pairs of guide arms (53) arranged at a distance from one another run parallel to one another.

10. The device in accordance with one of the aforementioned claims,
**characterised in that,**
the contact strip on the component is attached by means of at least two holding arms articulated on the component and the contact strip in a movable arrangement and that the holding arms run parallel to and at a distance from one another.

11. The device in accordance with Claim 10,
**characterised in that,**
one each of the holding arms is coupled with a guide arm (53) in a crosswise arrangement and that the intersection point of the holding and guide arm (53) is arranged approximately in the middle between the bottom edge of the component and the top edge of the contact strip in non-actuated status.

12. The device in accordance with Claim 1 or 2,
**characterised in that,**
a toggle lever (561) is arranged between the component (2) and the contact strip (18), in which case the toggle lever (561) consists of three arms (63, 64 and 65) that are mounted in an articulation pin (62).

13. The device in accordance with Claim 12,
**characterised in that,**
the toggle lever (61) is coupled to the pull rod (32) of the recovery device (31).

14. The device in accordance with Claim 12 or 13,
**characterised in that,**
Actuation of the toggle lever (61) releases a compression spring (67) that is under preload and that the compression spring (67) spreads apart the two arms (64, 65) of the toggle lever (61) that are articulated on the contact strip (18).

## Revendications

1. Dispositif (1) destiné au positionnement d'un composant (2) faisant partie du dispositif (1), en particulier d'une porte de protection ou d'une porte glissante à monter devant un poste de travail ou devant un point d'accès,
- avec une ou deux glissières profilées parallèles (3, 4), dans lesquelles le composant (2) est guidé sur un ou sur deux côtés, et réglé à l'aide d'un servo-équipement (11),
- avec un élément de barrage (21) qui, pour le positionnement du composant (2), collabore avec une colonne de guidage (7) parallèle aux glissières profilées (3, 4), ou un contact de barrage qui permet de désactiver le servo-équipement (11),
- et avec une réglette de contact (18) disposée sur le composant (2) qui, par l'intermédiaire d'éléments de raccordement mécaniques (29), se trouve en liaison d'actionnement par la forme et la force avec l'élément de barrage (21), ou qui possède une connexion électrique avec le contact de barrage,
où,
entre la réglette de contact (18) et le composant (2), il est prévu un équipement de rappel (31), où l'équipement de rappel (31) se trouve en liaison d'entraînement avec la réglette de contact (18), où, à la présence d'un objet accédant au poste de travail ou au point d'accès, l'équipement de rappel (31) est activé par la résistance de l'objet, et où la réglette de contact (18) est déplacée linéairement ou pivotée en direction du composant (2) par l'équipement de rappel (31),
**caractérisé en ce que**
l'équipement de rappel (31) est formé par une tige de traction (32) et par un élément élastique précontraint (33), de préférence un ressort hélicoïdal à pression, dont la force de précontrainte amène la tige de traction (32) à partir d'une position définie (15) vers une position finale (14).

2. Dispositif (1) destiné au positionnement d'un composant (2) faisant partie du dispositif (1), en particulier d'une porte de protection ou d'une porte glissante à monter devant un poste de travail ou devant un point d'accès, avec une ou deux glissières profilées parallèles (3, 4), dans lesquelles le composant (2) est guidé sur un ou sur deux côtés, et réglé à l'aide d'un servo-équipement (11), avec un élément de barrage (21) qui, pour le positionnement du composant (2), collabore avec une colonne de guidage (7) parallèle aux glissières profilées (3, 4), ou un contact de barrage qui permet de désactiver le servo-équipement (11), et avec une réglette de contact (18) disposée sur le composant (2) qui, par l'intermédiaire d'éléments de raccordement mécaniques (29), se trouve en liaison d'actionnement par la forme et la force avec l'élément de barrage (21), ou qui possède une connexion électrique avec le contact de barrage, où, entre la réglette de contact (18) et le composant (2), il est prévu un équipement de rappel (31), où l'équipement de rappel (31) se trouve en liaison d'entraînement avec la réglette de contact (18), où, à la présence d'un objet accédant au poste de travail ou au point d'accès, l'équipement de rappel (31) est activé par la résistance de l'objet, et où la réglette de contact (18) est déplacée linéairement ou pivotée en direction du composant (2) par l'équipement de rappel (31),
**caractérisé en ce que**
l'équipement de rappel (31) consiste en un piston (34) dans la chambre (35) duquel il est rempli un milieu (36), de préférence un gaz ou un liquide sous une certaine pression intérieure définie, et que lors du contact de la réglette de contact (18) avec un obstacle, le piston (34) actionne une tige de traction (32) qui se trouve en liaison d'actionnement par la forme et la force avec la réglette de contact (18) et qui a pour effet que la tige de traction (32) et la réglette de contact (18) sont déplacées ou pivotées en direction du composant (2).

3. Dispositif d'après une des revendications précédentes,
**caractérisé en ce que**
la force de rappel exercée par l'équipement de rappel (31) sur la réglette de contact (18) est dimensionnée de sorte que le mouvement de la réglette de contact (18) est plus rapide que la vitesse d'avance du composant (2).

4. Dispositif d'après une des revendications précédentes,
**caractérisé en ce que**
sur la tige de traction (32), il est prévu un corps à coulisse (37) qui est fixé sur l'extrémité libre de la tige de traction (32) éloignée de la réglette de contact (18), et que le corps à coulisse (37) est inséré dans un siège de positionnement (38) assigné au composant (2).

5. Dispositif d'après la revendication 4,
**caractérisé en ce que**
le corps à coulisse (37) possède une surface annulaire périphérique (39) donnant sur le siège de positionnement (38) et que, référé au plan perpendiculaire à la tige de traction (32), la surface annulaire périphérique (39) est inclinée vers l'extérieur sous un angle d'entre 10° et 20°, de préférence sous un angle de 15°.

6. Dispositif d'après la revendication 4 ou 5,
**caractérisé en ce que**
le pourtour extérieur du corps à coulisse (37) est plus grand que le diamètre intérieur du siège de positionnement (38) et que le siège de positionnement (38) est consiste en deux demi-coupelles (40' et 40") retenues pivotant sur le composant (2) par l'intermédiaire d'une articulation (16).

7. Dispositif d'après la revendication 6,
**caractérisé en ce que**
les demi-coupelles (40', 40") du siège de positionnement (38) enlacent le corps à coulisse (37) à la manière d'une pince, et qu'au premier contact de la réglette de contact (18) avec un objet, la tige de traction (32) est soulevée d'env. 1,5 à 2 mm, de préférence 1,8 mm, et que par le mouvement d'actionnement de la tige de traction (32), les deux demi-coupelles (40', 40") du siège de positionnement (38) sont ouvertes et libèrent le corps à coulisse (37).

8. Dispositif d'après une des revendications précédentes,
**caractérisé en ce que**
moyennant deux bras de guidage (53) parallèles et espacés l'un de l'autre, qui sont raccordés respectivement par articulation au composant (2) et à la réglette de contact (18), la réglette de contact (18) est disposée à une certaine distance du bord inférieur du composant (2).

9. Dispositif d'après une des revendications précédentes,
**caractérisé en ce que**
moyennant au moins deux paires de bras de guidage (53) disposés en croix, la réglette de contact (18) est disposée à une certaine distance du bord inférieur du composant (2), que les paires de bras de guidage (53) sont raccordés par articulation au composant (2) et à la réglette de contact (18) et que respectivement deux bras de guidage (53) disposée à une certaine distance l'un de l'autre des paires de bras de guidage (53) sont orientés parallèlement.

10. Dispositif d'après une des revendications précédentes,
**caractérisé en ce que**
la réglette de contact (18) est suspendue à l'aide d'au moins deux bras de retient articulés sur le composant (2) et sur la réglette de contact (18) sur le composant (2) et que les bras de retient sont orientés parallèlement et disposée à une certaine distance l'un de l'autre.

11. Dispositif d'après la revendication 10,
**caractérisé en ce que**
respectivement un des bras de retient est accouplé en croix avec un bras de guidage (53) et que, la réglette de contact (18) désactivée, le noeud du bras de retient et du bras de guidage (53) se trouve à peu près au centre entre le bord inférieur du composant (2) et le bord supérieur de la réglette de contact (18).

12. Dispositif d'après la revendication 1,
**caractérisé en ce que**,
entre le composant (2) et la réglette de contact (18), il est prévu un levier coudé (61) composé de trois bras (63, 64 et 65) logés dans un boulon d'articulation (62).

13. Dispositif d'après la revendication 12,
**caractérisé en ce que**
le levier coudé (61) est accouplé à la tige de traction (32) de l'équipement de rappel (31).

14. Dispositif d'après la revendication 12 ou 13,
**caractérisé en ce que**
par l'actionnement du levier coudé (61), il est détendu un ressort de pression précontraint (67) et que le ressort de pression (67) évade les deux bras (64, 65) du levier coudé (61) articulés sur la réglette de contact (18).
